(19) Europäisches Patentamt
European Patent Office
Office européen des brevets

(11) EP 2 647 117 B1

(12) **EUROPEAN PATENT SPECIFICATION**

(45) Date of publication and mention
of the grant of the patent:
**18.03.2015 Bulletin 2015/12**

(21) Application number: **11794447.0**

(22) Date of filing: **01.12.2011**

(51) Int Cl.:
***H02M 3/337*** (2006.01)  ***H01F 27/38*** (2006.01)

(86) International application number:
**PCT/EP2011/071499**

(87) International publication number:
**WO 2012/072732 (07.06.2012 Gazette 2012/23)**

(54) **RESONANT POWER SUPPLY WITH AN INTEGRATED INDUCTOR**

RESONANZSTROMVERSORGUNG MIT EINEM INTEGRIERTEN INDUKTOR

ALIMENTATION ÉLECTRIQUE À MODE RÉSONANT COMPRENANT UNE INDUCTANCE INTÉGRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2010 PL 39313310**

(43) Date of publication of application:
**09.10.2013 Bulletin 2013/41**

(73) Proprietor: **Akademia Gorniczo-Hutnicza im.
Stanislawa
Staszica w Krakowie
30-059 Krakow (PL)**

(72) Inventors:
• **WOREK, Cezary
PL-30-240 Krakow (PL)**
• **LIGENZA, Slawomir
PL-32-340 Wolbrom (PL)**

(74) Representative: **Pawlowski, Adam
Eupatent.PL
ul. Zeligowskiego 3/5
90-752 Lodz (PL)**

(56) References cited:
**EP-A2- 0 778 659    WO-A1-2009/154489
US-B1- 7 525 406**

**EP 2 647 117 B1**

**Description**

TECHNICAL FIELD

The present invention relates to a method for increasing power transferred by an integrated inductor and an integrated inductor suitable for a resonant-mode power supply with a quality-factor limiter.

BACKGROUND ART

Two main types of resonant voltage converters are known from the prior art literature: series converters and parallel converters. They are provided with bridge or half-bridge commutation structures supplying energy to resonant circuits. The control of the resonant circuit frequency allows controlling the resonant circuit voltage and current, and therefore the power supplied to the load. The main advantages of resonant converters are the possibility of commutating large currents at zero voltage thus minimizing commutation losses and, consequently, allowing generation of quasi-sinusoidal currents, which in turn reduces the level of generated interference. In order to ensure favourable conditions for semiconductor devices commutation in converter and inverter circuits, there are used complex resonant structures comprising a plurality of reactance elements. The most widely used are series-parallel structures provided with additional elements. Under resonance conditions, particularly if the current supplied to load has to be as close to sinusoidal as possible, the peak current values in the resonant circuit are considerably exceeding the maximum load current. Therefore, the resonant circuit reactance elements should enable energy transfer in the amount significantly exceeding the amount of energy being drawn. Larger amounts of energy accumulated in inductive elements require their larger dimensions and weight. It is, therefore, purposeful to seek solutions that allow reduction of the converter magnetic components mass thus reducing the converter manufacturing cost and its total mass.

This goal can be achieved by integration of inductive elements in such a manner that certain portions of the magnetic circuit are simultaneously utilized by at least two inductive elements.

The US Patent No. 5,886,516 presents an integrated multi-winding magnetic element intended for operation in a series resonant converter, in which on a single "UU" gapped magnetic core are located two windings of an isolation transformer and two additional windings constituting two inductive elements of the resonant circuit. This assembly constitutes a resonant circuit consisting of three inductances, two capacitances and an isolation transformer.

An integrated-magnetic apparatus is known from the US Patent No. 5,726,615, comprising three ferromagnetic pot cores, two of which have central core-columns carrying two flat windings located around these columns. These two inductive elements constitute a transformer. The third ferromagnetic pot core has a shorter central core-column around which a flat winding is placed. The third core-piece located adjacent to flat exterior surface of the transformer allows to form the third inductive element. The third inductive element is partially magnetically coupled through an air gap to the other windings and is phased to have the magnetic induction in the same direction as the magnetic induction in the ungapped magnetic circuit.

The US Patent No. 7,525,406 presents a structure that contains a plurality of coupled and non-coupled inductive elements and at least one closed magnetic circuit comprised of mutually contiguous magnetic elements having groves for current conductors in the X-axis and the perpendicular to it Y-axis. The current conductors located along the same axis exhibit mutual inductance but none between mutually orthogonal axes.

Mutual transfer of orthogonal magnetic fluxes by means of the central ferromagnetic core-piece is known from the US Patent No. 7,525,406.

The above examples illustrate embodiments of integrated reactance elements suitable for operation in typical resonant DC/DC converters. However, the aforementioned integrated reactances elements do not fully utilize the specific operating conditions of combined reactance elements, which allow also improving of some operating parameters.

A PCT application WO2009154489 discloses a series-parallel LC-LC resonant-mode power supply comprising an inductor and a transformer. The inductor and the primary winding of the transformer are connected in series and a capacitor is connected in parallel with the primary winding of the transformer. It would be desirable to improve such power supply construction to reduce the dimensions and weight of the resonant reactance elements to thereby reduce overall size and cost of the power supply.

DISCLOSURE OF THE INVENTION

The object of the invention is a resonant-mode power supply according to present claim 1.

Preferably, the shift in phase between the currents is close to 90°.

BRIEF DECRIPTION OF DRAWINGS

The invention is shown by means of exemplary embodiment on a drawing, in which:

Fig. 1 shows a half-bridge structure of a multi-resonance power supply with the quality factor limiter based on the integrated inductor ZER.
Fig. 2 shows an exemplary embodiment of the integrated inductor in which variable magnetic inductions produced by the transformer and inductor and superimposing in selected areas, are mutually orthogonal.
Fig. 3 shows an exemplary embodiment of the integrated inductor wherein variable magnetic inductions in selected areas have been shown, which originate from the transformer and inductor windings, and which are orthogonal with respect to each other.
Fig. 4 shows orthogonal induction vectors originating from transformer windings By(t) and from inductor windings Bx(t), as well as resulting induction vector Bxy(t) at different moments.
Fig.. 5 shows the magnetic field energy in the integrated inductor vs. time.

MODES FOR CARRYING OUT THE INVENTION

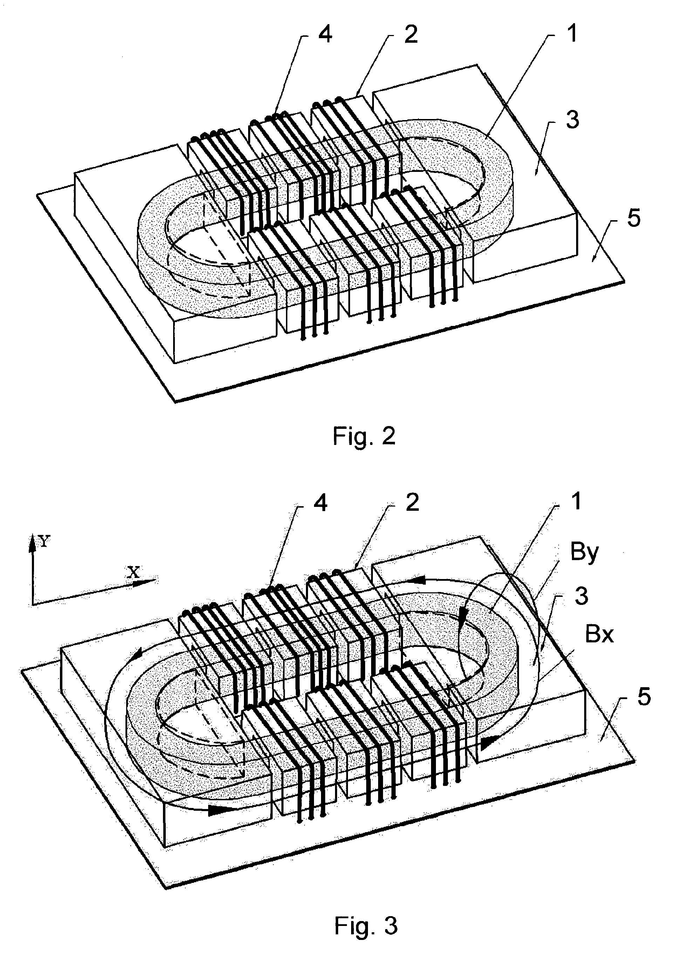

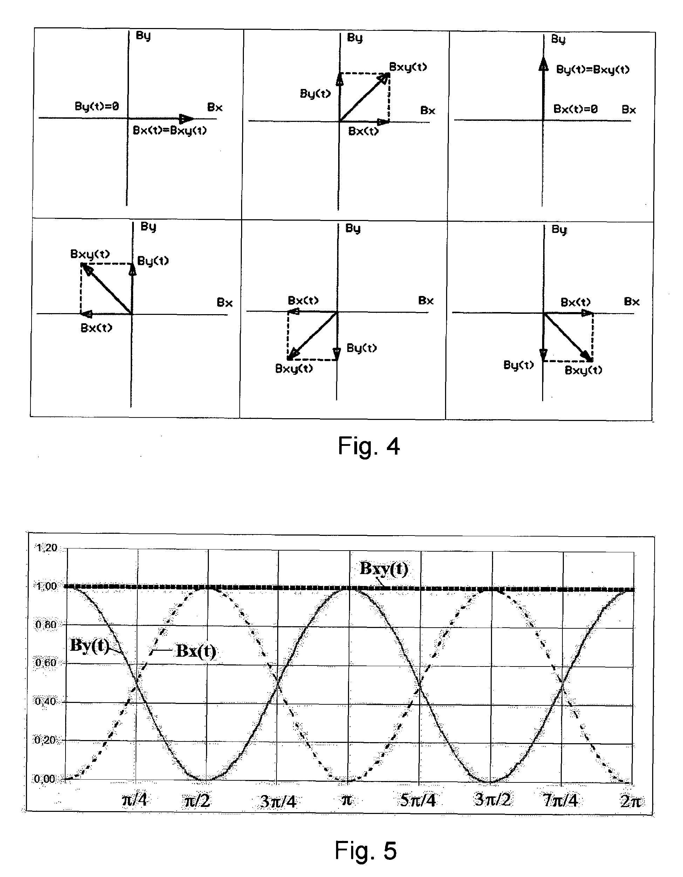

The integrated inductor shown in Fig. 2 comprises a plurality of closed-path magnetic elements 2, which are a combination of "U"-type and "I"-type core-pieces, and two closing magnetic core-pieces 3 of "EP"-type. Said magnetic elements entirely surround the internal windings 1 of the transformer. Such structure minimizes the leakage flux of the transformer windings. On the other hand, the inductor's magnetic circuit contains a plurality of air gaps and therefore allows achieving a more uniform magnetic field and reducing leakage flux of the inductor comprised of closed-path magnetic cores 2 and the inductor 4 winding. In the example embodiment shown in Fig. 2 the magnetic elements are located on a PCB laminate 5 and utilize the conductive layer on the other side of the board for the inductor 4 windings connections. For the sake of clarity, material filling the gaps between the closed-path magnetic elements 2 is not shown. The gaps may be filled by air or by a non-magnetic material. An advantage of the integrated inductor shown in Fig. 2 is that using an appropriate number of the closed-path magnetic elements 2 it can be easily adapted to different values of transferred power. Mutually orthogonal positioning of the transformer 1 winding and the inductor 4 winding causes the magnetic inductions produced by these windings in the closed-path magnetic elements 2 are oriented orthogonally with respect to each other, as shown in Fig. 3. An additional advantage is the time-shift between both magnetic induction vectors, achieved by the appropriate choice of relative values of reactance elements included in the resonant-mode power supply. It allows increasing the amount of energy stored per unit of the magnetic material volume. For this purpose, the phase shifts between the magnetic inductions superimposing in a selected portion of the magnetic circuit should be chosen to achieve possibly the greatest sum of peak energies stored during a single period in inductances of the integrated inductor. A properly chosen phase shift value allows increasing this sum without exceeding the saturation induction permissible for the magnetic material used. Fig. 4 shows orthogonal induction vectors originating from transformer windings By(t) and from inductor windings Bx(t), as well as resulting induction vector Bxy(t) at different moments: (starting from the top left corner) $0, \pi/4, \pi/2, 3\pi/4, 5\pi/4$ and $7\pi/4$.

Fig. 5 shows the magnetic field energy which is proportional to the square of the magnetic induction, stored in the orthogonal magnetic fields originating from the transformer By(t) and the inductor Bx(t), as well as the resulting sum of these energies, which in this case (when the amplitudes of the induction vectors are equal and orthogonal to each other and shifted in phase by $\pi/2$) is constant and time-independent.

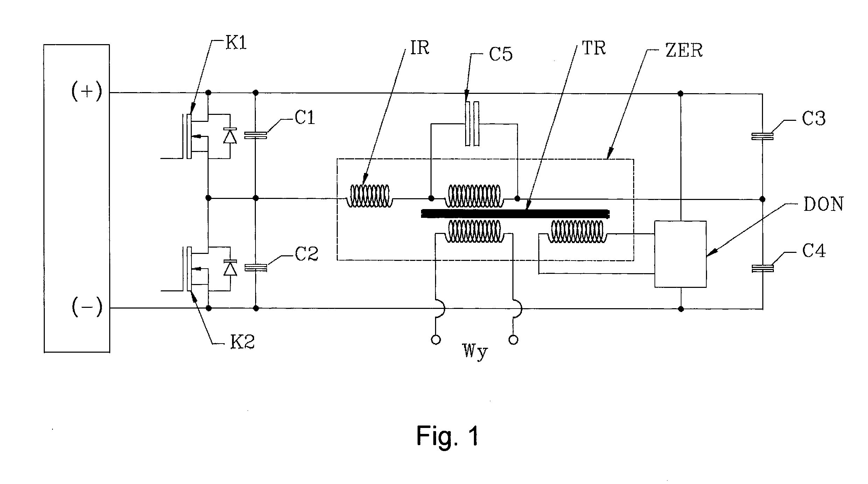

Fig. 1 shows a resonant-mode power supply employing the integrated inductor ZER. The integrated inductor incorporates the inductor IR and transformer TR provided with three windings: the primary winding, connected in series via the inductor IR with transistor switches K1, K2, the output winding and the control winding connected to the diode voltage limiter DON. The primary winding is also connected to the capacitive assembly C3, C4. Since there exists a series connection of the capacitive assembly C3, C4 with the inductor IR, the resultant impedance of elements connected in such a manner is strongly dependent on frequency thus allowing to control the voltage supplied to the primary winding of transformer TR. Since under resonance conditions the transformer TR output voltage can attain large values the present invention employs a limiting circuit comprised of the control winding connected with the diode voltage limiter DON.

The exemplary embodiment of the integrated inductor according to Fig. 1 is depicted in Fig. 2 where the transformer TR is made using the closed-path magnetic elements 2, closing magnetic components 3 and the transformer winding 1 which contains the primary winding, the secondary winding and the control winding. The inductor IR being a part of the integrated inductor ZER employs said closed-path magnetic elements 2, closing magnetic components 3 and the inductor winding 4 which is distributed evenly around the said closed-path magnetic elements 2. In other embodiments, the inductor winding can be also arranged around the closing magnetic components 3. However, preferably the inductor winding surrounds the magnetic components 2 having the smallest cross-section so as to limit the length of the winding wire.

In the resonant-mode power supply according to Fig. 1 it is possible to achieve, between the current $I_1$ flowing through the inductor IR and the current $I_2$ flowing through the primary winding of the transformer TR, a constant phase shift close to $\pm 90°$. These currents have associated magnetic induction fluxes described by vectors $B_1(t)$ and $B_2(t)$. The following analysis will relate to a point at a section of the magnetic circuit wherein both fluxes overlap. In addition, it is to be assumed that at this point the vectors $B_1$ and $B_2$ have equal amplitude.

When the vectors $B_1(t)$ and $B_2(t)$ are parallel, the length of the resulting magnetic induction vector can be defined as:

$$\left| B_R(t) \right| = B \cdot (\sin \omega t + \cos \omega t) = B \cdot \sqrt{2} \cdot \sin(45° + \omega t) = B_{AR} \cdot \sin(45° + \omega t)$$

The maximum amplitude of the induction vector resulting from both currents will be:

$$B_{AR} = B \cdot \sqrt{2}$$

Therefore, in order not to exceed the saturation induction $B_{MAX}$, the useful value of the induction will be at most:

$$B = \frac{B_{MAX}}{\sqrt{2}}$$

When the magnetic induction vectors $B_1(t)$ and $B_2(t)$ in the combined magnetic circuit are oriented orthogonally with respect to each other, the length of the resulting vector can be written as:

$$\left| B_{xy}(t) \right| = \sqrt{B^2 \cdot \sin^2 \omega t + B^2 \cdot \cos^2 \omega t} = B \cdot \sqrt{\sin^2 \omega t + \cos^2 \omega t} = B = B_{MAX}$$

The value of energy for a selected portion of the magnetic circuit is proportional to the square of the value (vector length) of the magnetic induction. Therefore, for a case wherein the induction vectors are arranged orthogonally, the sum of the peak energy values for the selected portion of the magnetic circuit can be doubled. In that case, two inductive elements are constructed utilising the same portion of the magnetic circuit, each of them having capability to operate at the maximum magnetic induction value B, close to the saturation induction $B_{MAX}$. Therefore, by utilising the same portion of the magnetic circuit for two windings, the amount on stored energy is increased. The sum of peak energy values is increased while maintaining the same amplitude of the magnetic induction vector.

Resonant-mode power supplies different than that of Fig. 1 can be used as embodiments of the invention, provided that the power supply is configured (by appropriate selection of inductance values) such that during operation the current ($I_1$) flowing through the inductor (IR) is shifted in phase with respect to the current ($I_2$) flowing through the primary winding of the transformer (TR).

The best results, i.e. the best increase in power transferred by the integrated inductor, are achieved when the shift in phase between the currents ($I_1$, $I_2$) is close to 90°, but for smaller phase shifts smaller power increases will be achieved as well.

**Claims**

1.   A series-parallel LC-LC resonant-mode power supply comprising an inductor (IR) a transformer (TR), wherein the inductor (IR) and the primary winding of the transformer (TR) are connected in series and a capacitor (C5) is connected in parallel with the primary winding of the transformer (TR), such that during operation the current ($I_1$) flowing through the inductor (IR) is shifted in phase with respect to the current ($I_2$) flowing through the primary winding of the transformer (TR), **characterized in that** the inductor (IR) and the transformer (TR) form an integrated inductor (ZER) and the main internal winding (1) of the transformer (TR) is entirely and coaxially surrounded by a plurality of closed-path magnetic elements (2, 3), at least two of them which are separated by non-magnetic gaps for closing the magnetic flux lines around the main internal winding (1) of the transformer (TR), wherein at least one magnetic element (2, 3) is surrounded by at least one auxiliary external winding (4) of the inductor (IR) arranged orthogonally to the main internal winding (1) of the transformer (TR) so as to produce mutually orthogonal oriented magnetic inductions in the closed-path magnetic elements (2, 3).

**2.** The resonant-mode power supply according to claim 1, **characterized in that** the shift in phase between the currents ($I_1$, $I_2$) is 90°.

**Patentansprüche**

**1.** Reihenparalleles LC-LC Resonanzmodus-Netzteil, umfassend eine Induktivität (IR), einen Transformator (TR), wobei die Induktivität (IR) und die Primärwindung des Transformators (TR) in Reihe verbunden sind, und eine Kapazität (C5) parallel mit der Primärwindung des Transformators (TR) verbunden ist, so dass im Betrieb der durch die Induktivität (IR) fließende Strom ($I_1$) bezüglich des durch die Primärwindung des Transformators (TR) fließenden Stroms ($I_2$) phasenverschoben ist, **dadurch gekennzeichnet, dass** die Induktivität (IR) und der Transformator (TR) eine integrierte Induktivität (ZER) bilden und die Haupt-Innenwindung (1) des Transformators (TR) vollständig und koaxial von einer Mehrzahl von Magnetelementen mit geschlossenen Pfaden (2, 3) umgeben ist, von welchen wenigstens zwei durch nicht-magnetische Spalte zum Schließen der magnetischen Feldlinien um die Haupt-Innenwindung (1) des Transformators (TR) herum getrennt sind, wobei wenigstens ein Magnetelement (2, 3) von wenigstens einer Hilfs-Außenwindung (4) der Induktivität (IR) umgeben ist, welche orthogonal zu der Haupt-Innenwindung (1) des Transformators (TR) angeordnet ist, um somit wechselseitig orthogonal orientierte magnetische Induktionen in den Magnetelementen mit geschlossenen Pfaden (2, 3) zu erzeugen.

**2.** Resonanzmodus-Netzteil nach Anspruch 1, **dadurch gekennzeichnet, dass** die Phasenverschiebung zwischen den Strömen ($I_1$, $I_2$) 90° beträgt.

**Revendications**

**1.** Alimentation électrique à mode résonant LC-LC série-parallèle comprenant un inducteur (IR) et un transformateur (TR), dans laquelle l'inducteur (IR) et l'enroulement primaire du transformateur (TR) sont connectés en série et un condensateur (C5) est connecté en parallèle avec l'enroulement primaire du transformateur (TR), de manière que, durant le fonctionnement, le courant ($I_1$) circulant à travers l'inducteur (IR) soit déphasé par rapport au courant ($I_2$) circulant à travers l'enroulement primaire du transformateur (TR), **caractérisée en ce que** l'inducteur (IR) et le transformateur (TR) forment un inducteur intégrée (ZER) et l'enroulement interne principal (1) du transformateur (TR) est entouré totalement et coaxialement par une pluralité d'éléments magnétiques en circuit fermé (2, 3), au moins deux desquels sont séparés par des entrefers non magnétiques pour fermer les lignes de flux magnétique autour de l'enroulement interne principal (1) du transformateur (TR), dans laquelle au moins un élément magnétique (2, 3) est entouré par au moins un enroulement externe auxiliaire (4) de l'inducteur (IR) agencé orthogonalement par rapport à l'enroulement interne principal (1) du transformateur (TR) de manière à produire des inductions magnétiques orientées mutuellement orthogonales dans les éléments magnétiques en circuit fermé (2, 3).

**2.** Alimentation électrique à mode résonant selon la revendication 1, **caractérisée en ce que** le déphasage entre les courants ($I_1$, $I_2$) est de 90°.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5886516 A
- US 5726615 A
- US 7525406 B
- WO 2009154489 A